(19) Europäisches Patentamt
European Patent Office
Office européen des brevets

(11) **EP 2 192 667 A2**

(12) **EUROPÄISCHE PATENTANMELDUNG**

(43) Veröffentlichungstag:
**02.06.2010 Patentblatt 2010/22**

(51) Int Cl.:
***H02J 3/38*** (2006.01)

(21) Anmeldenummer: **09014326.4**

(22) Anmeldetag: **17.11.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **27.11.2008   DE 102008059428**

(71) Anmelder: **Diehl AKO Stiftung & Co. KG
88239 Wangen (DE)**

(72) Erfinder:
• **Bertelsmann, Götz-Martin
88239 Wangen (DE)**
• **Hottendorf, Robert
88239 Wangen im Allgäu (DE)**

(74) Vertreter: **Diehl Patentabteilung
c/o Diehl Stiftung & Co. KG
Stephanstrasse 49
90478 Nürnberg (DE)**

(54) **Energieeinspeisevorrichtung**

(57) Eine Solarmodul weist einen Solargenerator (10) zum Erzeugen elektrischer Energie und einen Wechselrichter (12) zum Einspeisen der vom Solargenerator (10) erzeugten elektrischen Energie in ein Netz (14) oder wenigstens einen Verbraucher auf, wobei dem Solargenerator (10) eine Vorlast (16) parallel geschaltet ist. Eine Steuervorrichtung (18) steuert den Betrieb des Wechselrichters (12) derart, dass sie eine Differenzspannung ($U_{diff}$) zwischen belastetem und unbelastetem Solargenerator (10) misst, diese Differenzspannung ($U_{diff}$) mit einem Faktor (F) gewichtet und den Wechselrichter (12) nur dann betreibt, wenn die gewichtete Differenzspannung ($U_{gew}$) maximal einer Grenzspannung ($U_{max}$) entspricht.

Fig. 1

EP 2 192 667 A2

**Beschreibung**

Die vorliegende Erfindung betrifft eine Energieeinspeisevorrichtung, insbesondere eine Energieeinspeisevorrichtung nach dem Oberbegriff des Anspruches 1, sowie ein Verfahren zum Steuern des Betriebs einer solchen Energieeinspeisevorrichtung.

Ein Solarmodul als ein Beispiel einer Energieeinspeisevorrichtung weist üblicherweise einen Solargenerator mit wenigstens einer Solarzelle zum Umwandeln einfallender Strahlung in elektrische Energie, wenigstens einen dem Solargenerator parallel geschalteten Speicherkondensator und einen Solarwechselrichter zum Einspeisen der vom Solargenerator erzeugten elektrischen Energie in ein Netz oder wenigstens einen Verbraucher auf. Dabei sollte der Solarwechselrichter mit der Netzeinspeisung möglichst erst beginnen, wenn die Leistung des Solargenerators groß genug ist, um die Leerlaufverluste des Solarwechselrichters zu kompensieren, da andernfalls die noch fehlende Leistung dem Netz entnommen wird, was unnötige Verluste verursacht.

Ein bekannter Ansatz zur Lösung dieses Problems besteht darin, den Solarwechselrichter nur dann zuzuschalten, wenn die Solargeneratorspannung einen vorgegebenen Schwellenwert überschreitet. Problematisch ist hierbei, dass die Leerlaufspannung des Solargenerators wenig über seine mögliche Leistung zur Netzeinspeisung aussagt. Es kann daher passieren, dass schon unterhalb des Schwellenwerts eine ausreichende Leistung zur Verfügung steht, die in diesem Fall nicht genutzt wird. Andererseits kann auch der Fall eintreten, dass die Leistung des Solargenerators trotz Überschreiten des Spannungsschwellenwerts zu klein ist (zum Beispiel bei Teilverschattung der Solarzellen). Um bei dieser Konstellation nicht unnötig Energie aus dem Netz zu ziehen, muss der Solarwechselrichter wieder abgeschaltet werden. Bei ungünstigen Lichtverhältnissen (z.B. bei Niederschlagswetter) kann dies zu einem wiederholten Ein- und Ausschalten des Solarwechselrichters führen, was die Relais verschleißt und Geräusche verursacht.

Es ist ein zweiter Lösungsansatz bekannt, bei dem der Generator mit einem Widerstand belastet wird. In diesem Fall muss der konstante Wert des Widerstandes aber für eine erwünscht gute Funktionsweise auf den vom Kunden jeweils verwendeten Generator und auf sonstige Randbedingungen (z.B. Netzspannung, Beleuchtungsverhältnisse) abgestimmt werden, was sehr aufwändig ist und die Herstellungskosten deutlich erhöht.

Der vorliegenden Erfindung liegt die Aufgabe zugrunde, eine verbesserte Energieeinspeisevorrichtung zu schaffen, welche die Energieeinspeisung nur bei ausreichender Leistung des Solargenerators betreibt.

Diese Aufgabe wird durch eine Energieeinspeisevorrichtung mit den Merkmalen des Anspruches 1 bzw. durch ein Verfahren zum Steuern des Betriebs einer solchen Energieeinspeisevorrichtung mit den Merkmalen des Anspruches 10 gelöst. Vorteilhafte Ausgestaltungen und Weiterbildungen der Erfindung sind Gegenstand der jeweiligen Unteransprüche.

Die Energieeinspeisevorrichtung weist einen Generator zum Erzeugen elektrischer Energie und eine Einspeisevorrichtung zum Einspeisen der vom Generator erzeugten elektrischen Energie in ein Netz oder wenigstens einen Verbraucher auf, wobei dem Generator eine Vorlast parallel geschaltet ist. Eine Steuervorrichtung zum Steuern des Betriebs der Einspeisevorrichtung ist derart ausgebildet, dass sie eine Differenzspannung zwischen unbelastetem und durch die Vorlast belastetem Generator messen, diese Differenzspannung mit einem Faktor gewichten und die Einspeisevorrichtung nur dann, wenn die gewichtete Differenzspannung maximal einer Grenzspannung entspricht, betreiben kann. In einer bevorzugten und vorteilhaften Alternative ist der Faktor ungleich 1, insbesondere ist der Faktor größer als 1 besonders vorteilhaft.

Gemäß der Erfindung ist eine Steuervorrichtung zum Steuern des Betriebs der Einspeisevorrichtung vorgesehen, die ausgebildet ist, um eine Differenzspannung zwischen unbelastetem und durch die Vorlast belastetem Generator zu messen, diese Differenzspannung mit einem Faktor, bevorzugt mit einem Faktor ungleich 1, insbesondere mit einem Faktor größer als 1 zu gewichten und die Einspeisevorrichtung nur dann zu betreiben, wenn die gewichtete Differenzspannung maximal einer Grenzspannung entspricht. Diese Ausgestaltung der Steuervorrichtung gewährleistet auf einfache Weise, dass die Einspeisevorrichtung nur dann aktiviert wird, wenn die Leistung des Generators ausreichend hoch ist. Andererseits erfolgt die Energieeinspeisung in das Netz oder einen Verbraucher schon bei relativ geringen, aber bereits ausreichenden Leistungen des Generators, sodass die Effektivität der Energieeinspeisevorrichtung erhöht ist. Dabei wird eine relativ genaue Prognose der tatsächlich zur Verfügung stehenden Leistung berechnet. Bei dem erfindungsgemäßen System kann die Vorlast zudem deutlich schwächer dimensioniert werden als es dem Eigenverbrauch der Einspeisevorrichtung entspricht. Hierdurch sinken Bauvolumen, Abwärme und Kosten der Vorlast, was insbesondere bei größeren Generatorleistungen von Vorteil ist. Ferner wird ein unnötiges Relaisschalten verhindert.

Die Energieeinspeisevorrichtung kann in vorteilhafter Weise zum Beispiel bei einem Solarmodul eingesetzt werden. In diesem Fall ist der Generator ein Solargenerator mit wenigstens einer Solarzelle und ist die Einspeisevorrichtung ein Solarwechselrichter. Die Erfindung ist aber nicht auf diese Anwendungsmöglichkeit beschränkt und kann auch anderweitig eingesetzt werden. So kann die Energieeinspeisevorrichtung Generatoren zum Erzeugen elektrischer Energie aus Strahlung, mechanischer Energie, kinetischer Energie und dergleichen enthalten sowie Einspeisevorrichtungen mit oder ohne Transformatoren, mit Wechselrichtern, Gleichrichtern oder ohne Stromrichterelemente aufweisen.

In einer Ausgestaltung der Erfindung kann die Grenzspannung von einer Leerlaufspannung des Generators und/oder einer minimal benötigten Eingangsspannung der Einspeisevorrichtung abhängen. Beispielsweise kann die Grenzspannung die Differenzspannung zwischen der Leerlaufspannung des Generators und der minimal benötigten Eingangsspannung der Einspeisevorrichtung sein.

In einer weiteren Ausgestaltung der Erfindung kann der Faktor von einem Verhältnis einer Eigenverbrauchsleistung zu einer Vorbelastungsleistung der Energieeinspeisevorrichtung und/oder einem lastabhängigen Verhalten des Generators abhängen. Außerdem kann der Faktor einen fest vorgegebenen Wert haben oder ein variabler Faktor sein. In einer bevorzugten Ausführungsform kann der Faktor zum Beispiel als selbstlernender Faktor konzipiert sein.

In einer noch weiteren Ausgestaltung der Erfindung kann die Steuervorrichtung in die Einspeisevorrichtung integriert sein.

Die oben genannten verschiedenen Ausgestaltungen der Erfindung können natürlich in beliebiger Weise miteinander kombiniert werden.

Obige sowie weitere Merkmale, Vorteile und Anwendungsmöglichkeiten der Erfindung werden aus der nachfolgenden Beschreibung eines bevorzugten, nichteinschränkenden Ausführungsbeispiels unter Bezugnahme auf die beiliegenden Zeichnungen besser verständlich. Darin zeigen:

Fig. 1     ein stark vereinfachtes Blockschaltbild einer Energieeinspeisevorrichtung gemäß der vorliegenden Erfindung;

Fig. 2     ein Flussdiagramm zum Erläutern der Funktionsweise der Energieeinspeisevorrichtung von Fig. 1 gemäß einem bevorzugten Ausführungsbeispiel der Erfindung.

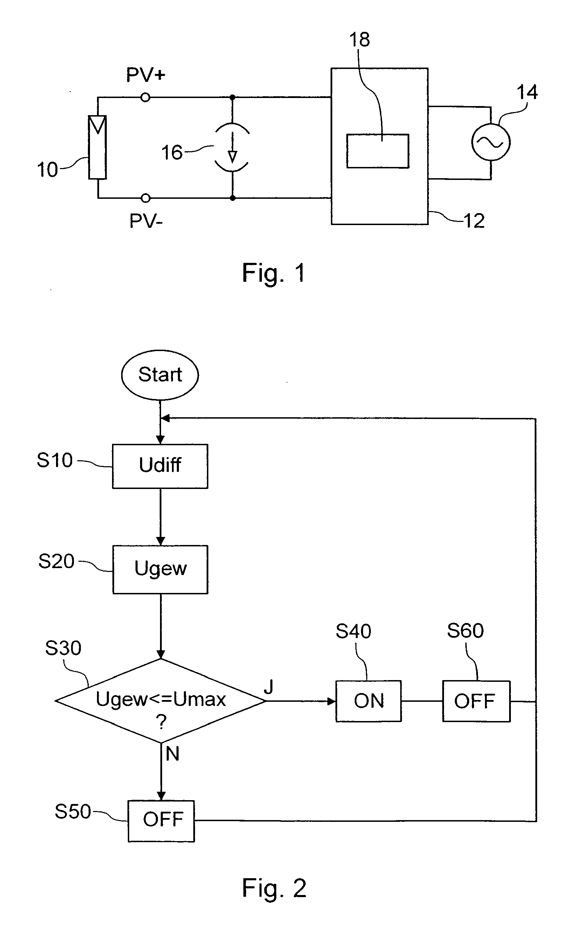

Bezug nehmend auf Fig. 1 wird zunächst der Aufbau einer Energieeinspeisevorrichtung der Erfindung am Beispiel eines Solarmoduls näher erläutert. Wie oben erwähnt, ist die vorliegende Erfindung aber nicht auf diesen Anwendungsfall beschränkt.

Das Solarmodul enthält in bekannter Weise einen Solargenerator 10 mit wenigstens einer Solarzelle zum Umwandeln einfallender Strahlung in elektrische Energie und einen Solarwechselrichter 12 zum Einspeisen der vom Solargenerator 10 erzeugten Energie in ein Netz 14 oder wenigstens einen Verbraucher. Wie in Fig. 1 dargestellt, ist das Solarmodul zudem mit einer Vorlast 16 versehen, die dem Solargenerator 10 und einem ggf. ebenfalls vorhandenen Speicherkondensator parallel geschaltet ist. Diese Vorlast 16 kann schwächer ausgebildet sein als es dem Eigenverbrauch des Wechselrichters 12 entspricht. Hierdurch sinken Bauvolumen, Abwärme und Kosten für die Vorlast 16 und damit für die gesamte Energieeinspeisevorrichtung. Dies ist insbesondere bei großen Generatorleistungen von Vorteil.

Diese Energieeinspeisevorrichtung besitzt weitere eine Steuervorrichtung 18 zum Steuern des Betriebs des Solarmoduls, insbesondere seines Wechselrichters 12. Diese Steuervorrichtung 18 ist vorzugsweise in den Solarwechselrichter 12 integriert und zum Beispiel als Mikrocontroller ausgebildet.

Die Funktionsweise dieser Energieeinspeisevorrichtung wird nun anhand des Flussdiagramms von Fig. 2 genauer erläutert.

Während des Betriebs der Energieeinspeisevorrichtung wird die Aktivierung bzw. Deaktivierung der Einspeisevorrichtung 12, d.h. in diesem Beispiel des Solarwechselrichters, durch die Steuervorrichtung 18 in der nachfolgend beschriebenen Weise fortlaufend überwacht und gesteuert.

Bevor der Wechselrichter 12 aktiviert wird, misst die Steuervorrichtung 18 mit Hilfe der Vorlast zunächst die Spannung $U_{leer}$ am unbelasteten Generator 10 und die Spannung $U_{last}$ am durch die Vorlast 16 belasteten Generator 10. Aus diesen beiden Spannungswerten $U_{leer}$ und $U_{last}$ berechnet sie dann in Schritt S10 die Differenzspannung $U_{diff}$ nach der Gleichung:

$$U_{diff} = \left| U_{last} - U_{leer} \right| \qquad \qquad \dots (1)$$

Diese Differenzspannung $U_{diff}$ wird in einem nächsten Schritt S20 mit einem Faktor F gewichtet, bevorzugt ist der Faktor F ungleich 1, insbesondere ist der Faktor F größer als 1:

$$U_{gew} = F \cdot U_{diff} = F \cdot \left| U_{last} - U_{leer} \right| \quad \text{mit } F \neq 1 \qquad \dots (2)$$

Dieser Faktor F hängt von dem Verhältnis der Eigenverbrauchsleistung zur Vorbelastungsleistung sowie von dem lastabhängigen Generatorverhalten ab. Die Eigenverbrauchsleistung und die Vorbelastungsleistung der Energieeinspeisevorrichtung sind vorbestimmte Werte, die sich aus den am Wechselrichter 12 angeschlossenen Lasten bzw. der Dimensionierung der Bauteile der gesamten Vorrichtung ergeben.

Je nach Ausführungsform des Solarmoduls bzw. allgemein der Energieeinspeisevorrichtung ist dieser Faktor F ein konstanter, fest vorgegebener Zahlenwert oder eine variable Größe. Im letztgenannten Fall kann der Faktor F als eine Funktion mit Betriebsparametern der Energieeinspeisevorrichtung berechnet werden. Diese Betriebsparameter sind zum Beispiel die Temperatur, die Netzspannung, usw. In einer weiteren Ausführungsvariante kann der Faktor F auch als selbstlernender Faktor konzipiert sein, d.h. die Steuervorrichtung 18 passt den Faktor F im Laufe der Zeit selbsttätig an die Gegebenheiten an, um ihn zu optimieren. Bei entsprechender Wahl des Gewichtungsfaktors F können zudem die diversen Toleranzen des gesamten Systems berücksichtigt werden.

In einem nächsten Schritt S30 vergleicht die Steuervorrichtung 18 die ermittelte gewichtete Differenzspannung $U_{gew}$ mit einer Grenzspannung $U_{max}$. Ist die gewichtete Differenzspannung $U_{gew}$ kleiner oder gleich der Grenzspannung $U_{max}$ bedeutet dies, dass die Generatorleistung ausreichend hoch ist, um die Einspeisevorrichtung 12 zu betreiben. Die Steuervorrichtung 18 aktiviert daher in Schritt S40 den Solarwechselrichter 12 und deaktiviert die Vorlast 16. Ist dagegen die gewichtete Differenzspannung $U_{gew}$ größer als die Grenzspannung $U_{max}$, so wird der Solarwechselrichter 12 von der Steuervorrichtung 18 nicht aktiviert (Schritt S50).

Nachdem die Einspeisevorrichtung 12 aktiviert worden ist, überwacht die Steuervorrichtung 18 die Eingangsleistung der Einspeisevorrichtung 12. Sinkt die Eingangsleistung der Einspeisevorrichtung 12 auf den Eigenverbrauchswert der Einspeisevorrichtung 12 ab, schaltet die Steuervorrichtung 18 die Einspeisevorrichtung 12 ab (Schritt S60), die sich dann im Standby-Betrieb befindet.

Die vorbeschriebenen Schritte S10 bis S50 werden während des Standby-Betriebs der Energieeinspeisevorrichtung weiter wiederholt, um die Aktivierung der Einspeisevorrichtung 12 möglichst optimal zu steuern. Es sollen einerseits bereits kleine Energiewerte in das Netz eingespeist werden, sofern dies möglich ist, und andererseits ein häufiges Ein- und Ausschalten der Relais vermieden werden.

Die Grenzspannung $U_{max}$, die in Schritt S30 von der Steuervorrichtung 18 zum Vergleich mit der gewichteten Differenzspannung $U_{gew}$ herangezogen wird, hängt zum Beispiel von der Quellenleerlaufspannung $U_{leer}$, d.h. vom Spannungswert des unbelasteten Generators 10 und der minimal benötigten Eingangsspannung $U_{ein}$ der Einspeisevorrichtung 12 ab. In einem Ausführungsbeispiel ist die Grenzspannung $U_{max}$ die Differenz zwischen der Quellenleerlaufspannung $U_{leer}$ und der minimal benötigten Eingangsspannung $U_{ein}$ des Wechselrichters 12:

$$U_{max} = U_{leer} - U_{ein} \qquad \dots (3)$$

Die minimal benötigte Eingangsspannung $U_{ein}$ ist ein Spannungswert, der sich dynamisch verändern kann und im Allgemeinen von der vorgegebenen Netzspannung abhängt, welche ohnehin von der Steuervorrichtung 18 zwecks Überwachung fortlaufend gemessen wird.

Die Energieeinspeisevorrichtung der Erfindung ermöglicht die Einspeisung selbst keiner Leistungen in ein Netz 14, indem die Einspeisevorrichtung 12 zu dem Zeitpunkt aktiviert wird, wenn die vom Generator 10 zur Verfügung gestellte Energie den Eigenverbrauch der Einspeisevorrichtung 12 entspricht oder übersteigt. Gleichzeitig wird ein zu häufiges Schalten der Relais zum Beispiel bei schwankenden Bedingungen und Generatorleistungen vermieden.

Die oben beschriebene Erfindung ist insbesondere bei Energieeinspeisevorrichtungen von Vorteil, bei denen die Generatoren 10 schwankende Leistungen zur Verfügung stellen, wie dies zum Beispiel bei Solargeneratoren der Fall ist. Außerdem kann die erfindungsgemäße Energieeinspeisevorrichtung auch in vorteilhafter Weise bei trafolosen Einspeisevorrichtungen 12 effektiv eingesetzt werden.

**Patentansprüche**

1. Energieeinspeisevorrichtung, mit einem Generator (10) zum Erzeugen elektrischer Energie und einer Einspeisevorrichtung (12) zum Einspeisen der vom Generator (10) erzeugten elektrischen Energie in ein Netz (14) oder wenigstens einen Verbraucher,
**dadurch gekennzeichnet,**
**dass** dem Generator (10) eine Vorlast (16) parallel geschaltet ist; und
**dass** eine Steuervorrichtung (18) zum Steuern des Betriebs der Einspeisevorrichtung (12) vorgesehen ist, die ausgebildet ist, um eine Differenzspannung ($U_{diff}$) zwischen unbelastetem und durch die Vorlast (16) belastetem Generator (10) zu messen, diese Differenzspannung ($U_{diff}$) mit einem Faktor (F), bevorzugt mit einem Faktor (F) ungleich 1, insbesondere mit einem Faktor (F) größer als 1 zu gewichten und die Einspeisevorrichtung (12) nur dann zu betreiben, wenn die gewichtete Differenzspannung ($U_{gew}$) maximal einer Grenzspannung ($U_{max}$) entspricht.

2. Energieeinspeisevorrichtung nach Anspruch 1,
**dadurch gekennzeichnet,**
**dass** die Grenzspannung ($U_{max}$) von einer Leerlaufspannung ($U_{leer}$) des Generators (10) abhängt.

3. Energieeinspeisevorrichtung nach Anspruch 1 oder 2,
**dadurch gekennzeichnet,**
**dass** die Grenzspannung ($U_{max}$) von einer minimal benötigten Eingangsspannung ($U_{ein}$) der Einspeisevorrichtung (12) abhängt.

4. Energieeinspeisevorrichtung nach Anspruch 1,
**dadurch gekennzeichnet,**
**dass** die Grenzspannung ($U_{max}$) die Differenzspannung zwischen einer Leerlaufspannung ($U_{leer}$) des Generators (10) und einer minimal benötigten Eingangsspannung ($U_{ein}$) der Einspeisevorrichtung (12) ist.

5. Energieeinspeisevorrichtung nach einem der vorherigen Ansprüche,
**dadurch gekennzeichnet,**
**dass** der Faktor (F) von einem Verhältnis einer Eigenverbrauchsleistung zu einer Vorbelastungsleistung der Energieeinspeisevorrichtung abhängt.

6. Energieeinspeisevorrichtung nach einem der vorherigen Ansprüche,
**dadurch gekennzeichnet,**
**dass** der Faktor (F) von einem lastabhängigen Verhalten des Generators (10) abhängt.

7. Energieeinspeisevorrichtung nach einem der vorherigen Ansprüche,
**dadurch gekennzeichnet,**
**dass** der Faktor (F) einen fest vorgegebenen Wert hat oder ein variabler Faktor ist.

8. Energieeinspeisevorrichtung nach einem der vorherigen Ansprüche,
**dadurch gekennzeichnet,**
**dass** die Steuervorrichtung (18) ausgebildet ist, um den Faktor (F) in selbstlernender Weise anzupassen.

9. Energieeinspeisevorrichtung nach einem der vorherigen Ansprüche,
**dadurch gekennzeichnet,**
**dass** die Steuervorrichtung (18) in die Einspeisevorrichtung (12) integriert ist.

10. Verfahren zum Steuern des Betriebs einer Energieeinspeisevorrichtung mit einem Generator (10) zum Erzeugen elektrischer Energie und einer Einspeisevorrichtung (12) zum Einspeisen der vom Generator (10) erzeugten elektrischen Energie in ein Netz (14) oder wenigstens einen Verbraucher, wobei dem Generator (10) eine Vorlast (16) parallel geschaltet ist, mit den Schritten:

    Messen einer Differenzspannung ($U_{diff}$) zwischen unbelastetem und durch die Vorlast (16) belastetem Generator (10);
    Gewichten dieser Differenzspannung ($U_{diff}$) mit einem Faktor (F), bevorzugt mit einem Faktor (F) ungleich 1, insbesondere mit einem Faktor (F) größer als 1;
    Vergleichen der gewichteten Differenzspannung ($U_{gew}$) mit einer Grenzspannung ($U_{max}$); und
    Betreiben der Einspeisevorrichtung (12) nur dann, wenn die gewichtete Differenzspannung ($U_{gew}$) maximal der Grenzspannung ($U_{max}$) entspricht.

11. Verfahren nach Anspruch 10,
**dadurch gekennzeichnet,**
**dass** die Grenzspannung ($U_{max}$) von einer Leerlaufspannung ($U_{leer}$) des Generators (10) und/oder einer minimal benötigten Eingangsspannung ($U_{ein}$) der Einspeisevorrichtung (12) abhängt.

12. Verfahren nach Anspruch 11,
**dadurch gekennzeichnet,**
**dass** die Grenzspannung ($U_{max}$) die Differenzspannung zwischen einer Leerlaufspannung ($U_{leer}$) des Generators

(10) und einer minimal benötigten Eingangsspannung ($U_{ein}$) der Einspeisevorrichtung (12) ist.

13. Verfahren nach einem der Ansprüche 10 bis 12,
    **dadurch gekennzeichnet,**
    **dass** der Faktor (F) von einem Verhältnis einer Eigenverbrauchsleistung zu einer Vorbelastungsleistung der Energieeinspeisevorrichtung und/oder einem lastabhängigen Verhalten des Generators (10) abhängt.

14. Verfahren nach einem der Ansprüche 10 bis 13,
    **dadurch gekennzeichnet,**
    **dass** der Faktor (F) einen fest vorgegebenen Wert hat oder ein variabler Faktor ist.

15. Verfahren nach einem der Ansprüche 10 bis 14,
    **dadurch gekennzeichnet,**
    **dass** der Faktor (F) als selbstlernender Faktor konzipiert ist.

Fig. 1

Fig. 2